# EUROPEAN PATENT APPLICATION

(11) **EP 4 653 470 A1**
(43) Date of publication of application: **26.11.2025**
(21) Application number: 25178482.3
(22) Date of filing: 23.05.2025
(51) Int. Cl.: C08B 3/16, C08B 11/20, C08B 13/00

(54) **HYDROXYPROPYL METHYLCELLULOSE ACETATE SUCCINATE AND METHOD FOR PRODUCING HYDROXYPROPYL METHYLCELLULOSE ACETATE SUCCINATE**

(30) Priority: 24.05.2024 JP 2024084437
(71) Applicant: SHIN-ETSU CHEMICAL CO., LTD., Tokyo 100-0005 (JP)
(72) Inventor: INADA, Shinnosuke, Niigata, 942-8601 (JP); HIRAMA, Yasuyuki, Niigata, 942-8601 (JP)
(74) Representative: Ipsilon

(57) **Abstract**

Provided is a method for producing hydroxypropyl methylcellulose acetate succinate that can be industrially and efficiently produced and results in particles having controlled pore volume. The method for producing hydroxypropyl methylcellulose acetate succinate includes an esterification reaction step, a precipitation step, a liquid removal step, a pulverizing step, and a drying step, wherein a screw press is used in the liquid removal step.

## Description

### BACKGROUND OF THE INVENTION

### Field of the invention

The present invention relates to hydroxypropyl methylcellulose acetate succinate and a method for producing hydroxypropyl methylcellulose acetate succinate.

### Background art

Hydroxypropyl methylcellulose acetate succinate (hereinafter also referred to as "HPMCAS") is widely known as an enteric polymer which is synthesized by introducing in total four types of substituent groups of which two types of substituents-methyl groups (-CH₃) and hydroxypropyl groups (-C₃H₆OH)-are introduced into a cellulose backbone to form an ether structure and the other two types of substituents -acetyl groups (-COCH₃) and succinyl groups (-COC₂H₄COOH)-are introduced into the cellulose backbone to form an ester structure.

HPMCAS is widely used for the purposes of, for example, coating a tablet, controlling drug release, and preparing a solid dispersion for use together with a water-insoluble drug through hot melt extrusion or spray drying.

HPMCAS can be industrially produced by esterifying hydroxypropyl methylcellulose in the presence of a catalyst, and then subjecting it to a precipitating step, a liquid-removal step, a drying step, and, if necessary, a pulverizing step. However, reducing the drying time has been a longstanding issue from the perspective of production efficiency.

For example, JP-A-2016-532725 reports a production method of reducing the loss on drying of a humid mass after the liquid removal step as a production method for shortening the drying time. Specifically, this reference reports a method of removing a liquid from a suspension adjusted to at least 28°C using a filtration device, a filter centrifuge, or a decanter centrifuge in a step corresponding to the liquid removal step.

### SUMMARY OF THE INVENTION

However, the liquid removal method described in JP-A-2016-532725, which uses a filtration device or a centrifugal dehydrator, has difficulty in sufficiently reducing the water content in the HPMCAS suspension. This leads to a high level of loss on drying during the drying step, which in turn reduces production efficiency. Further, JP-A-2016-532725 employs a filtration device that is not suitable for industrial production because the amount of liquid that can be removed at one time is limited. Additionally, when the filtration device employs the filter paper, filter fibers may be mixed thereinto as impurities when the liquid-removed HPMCAS is removed from the filter paper, making it difficult for industrial application.

Moreover, the liquid removal technique using centrifugal force, such as that of a centrifugal dehydrator described in JP-A-2016-532725, applies a weak force to HPMCAS particles, making it challenging to reduce the pore volume within the particle. The pore volume within the particles is an important factor when HPMCAS is used for, for example, hot melt extrusion or spray drying. When HPMCAS is used for hot melt extrusion, the air trapped within the pores of the HPMCAS particles can problematically compromise the mixing uniformity with a drug. This deteriorated mixing uniformity results in reduced solubility of drug in the resultant solid dispersion, preventing sufficient drug potency from being achieved. Meanwhile, when HPMCAS is used for spray drying, the air trapped within the pores produces a significant amount of bubbles when a solution of HPMCAS is prepared. The time required to remove these bubbles is long, thereby significantly reducing production efficiency. Although there are issues with the pore volume within HPMCAS particles as mentioned above, no studies have yet discussed a method for producing HPMCAS optimized to address these issues, which need to be promptly addressed to find solutions.

The present invention has been made in view of these circumstances, and it is an object of the present invention to provide a method for producing hydroxypropyl methylcellulose acetate succinate that can be industrially and efficiently produced, wherein the method involves a liquid removal step. It is also an object of the present invention to provide a method for producing hydroxypropyl methylcellulose acetate succinate with controlled pore volume in HPMCAS particles.

The inventors of the present invention diligently conducted a series of studies to address the aforementioned objectives and discovered that using a screw press as a liquid removal apparatus in a method for producing HPMCAS enables reduction in the water content of HPMCAS after being subjected to liquid removal, which results in reduced loss on drying of HPMCAS during the drying step, thereby shortening the drying time. In addition, the inventors surprisingly discovered that the HPMCAS produced by undergoing a liquid removal step with the aid of a screw press results in particles that are consolidated so that it exhibits an enhanced loose bulk density with reduced pore volume, which minimizes bubble formation when HPMCAS and a solvent is mixed and stirred, thus completing the invention. The present invention provides hydroxypropyl methylcellulose acetate succinate and a method for producing the hydroxypropyl methylcellulose acetate succinate that are as defined below:
<1> A method for producing hydroxypropyl methylcellulose acetate succinate comprising:
   an esterification reaction step of allowing hydroxypropyl methylcellulose and an esterification agent to react with each other in the presence of a catalyst to produce a reaction solution;
   a precipitation step of mixing water with the reaction solution to precipitate crude hydroxypropyl methylcellulose acetate succinate to obtain a suspension of hydroxypropyl methylcellulose acetate succinate;
   a liquid removal step of using a screw press to remove liquid from the suspension of hydroxypropyl methylcellulose acetate succinate to obtain liquid-removed hydroxypropyl methylcellulose acetate succinate;
   a pulverizing step of pulverizing the liquid-removed hydroxypropyl methylcellulose acetate succinate using a pulverizer to obtain pulverized hydroxypropyl methylcellulose acetate succinate; and
   a drying step of drying the pulverized hydroxypropyl methylcellulose acetate succinate to obtain hydroxypropyl methylcellulose acetate succinate.
<2> The method according to <1>, further comprising a washing step of washing the crude hydroxypropyl methylcellulose acetate succinate in the suspension of hydroxypropyl methylcellulose acetate succinate obtained in the precipitation step to prepare a suspension of hydroxypropyl methylcellulose acetate succinate for use in the liquid removal step, wherein the washing step is introduced between the precipitation step and the liquid removal step.
<3> The method according to <1> or <2>, further comprising a preliminary liquid removal step of preliminarily removing a liquid using a dehydrator from the suspension of hydroxypropyl methylcellulose acetate succinate obtained in the precipitation step to prepare a preliminarily liquid-removed hydroxypropyl methylcellulose acetate succinate for use in the liquid removal step, wherein the preliminary liquid removal step is introduced between the precipitation step and the liquid removal step.
<4> The method according to any one of <1> to <3>, wherein the pulverizer for use in the pulverizing step is a feather mill.
<5> The method according to any one of <1> to <4>, wherein the screw press for use in the liquid removal step has a screw shaft inlet temperature of 0 to 80°C.
<6> The method according to any one of <1> to <5>, wherein the liquid-removed hydroxypropyl methylcellulose acetate succinate has a water content of 25 to 60% by mass.
<7> A hydroxypropyl methylcellulose acetate succinate having a loose bulk density above 0.6 g/cm³.

The present invention allows for reducing the water content in HPMCAS from which a liquid is removed, thereby shortening the drying time in the method for producing HPMCAS. The present invention also enables the production of hydroxypropyl methylcellulose acetate succinate that allows for the minimization of bubble formation when HPMCAS and a solvent are mixed and stirred for the purpose of preparing a solid dispersion by using a method such as spray drying.

### BRIEF DESCRIPTION OF THE DRAWINGS

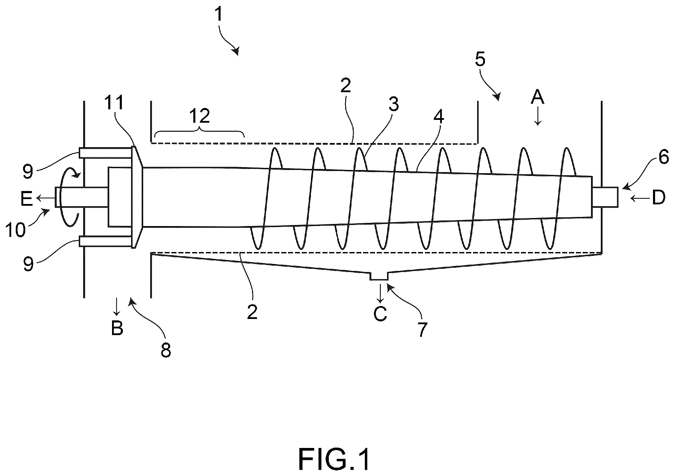

FIG. 1 is a schematic view illustrating an example of a screw press for use in a liquid removal step.

### DETAILED DESCRIPTION OF THE INVENTION

The method for producing HPMCAS according to the present invention essentially includes an esterification reaction step, a precipitation step, a liquid removal step, a pulverizing step, and a drying step, wherein the liquid removal step involves the use of a screw press. The method for producing HPMCAS according to the present invention may further include, as necessary, a washing step and/or a preliminary liquid removal step.

The term "screw press" as used herein refers to a machine for performing solid-liquid separation using a compressing force produced with the aid of variation in volume that varies from a supply region of the dewatering raw material to a discharge region of the dewatered product.

### [Esterification reaction step]

In the esterification reaction step, hydroxypropyl methylcellulose and an esterification agent (such as succinic anhydride or acetic anhydride) are reacted with each other in the presence of a catalyst to obtain a reaction solution.

A method for obtaining hydroxypropyl methylcellulose (hereafter also referred to as "HPMC") which is a raw material of HPMCAS will be explained below.

HPMC obtained by a known method or the one that is commercially available may be used. HPMC may for example be prepared in such a manner where a solution of an alkali metal hydroxide such as sodium hydroxide or potassium hydroxide is at first brought into contact with, for example, a sheet-, chip- or powder-like pulp to form an alkali cellulose, followed by adding an etherifying agent such as methyl chloride or propylene oxide to perform the reaction.

The solution of alkali metal hydroxide for use in preparing the alkali cellulose is not particularly limited so long as an alkali cellulose of desired composition may be obtained but it is preferred in terms of economical perspective that the solution be a solution of sodium hydroxide or potassium hydroxide. Further, in terms of stabilizing the composition of the alkali cellulose and securing the transparency of the cellulose ether, it is preferred that the solution have a concentration of 23 to 60% by mass, more preferably 35 to 55% by mass.

After producing the alkali cellulose, a conventional method may be used to add an etherifying agent such as methyl chloride or propylene oxide to the alkali cellulose to perform an etherification reaction to thereby obtain HPMC.

The degree of substitution (DS) of methoxy groups of HPMC is preferably 1.10 to 2.20, more preferably 1.40 to 2.00, and even more preferably 1.60 to 2.00, in terms of obtaining HPMC with a small number of insoluble fibers. The molar substitution (MS) of hydroxypropoxy groups of HPMC is preferably 0.10 to 1.00, more preferably 0.20 to 0.80, and even more preferably 0.2 to 0.65, in terms of obtaining HPMC with a small number of insoluble fibers.

The term "insoluble fibers" as used herein refers to water-insoluble parts of the fibers that are contained in HPMC. HPMC exhibits water solubility after having the hydroxyl groups in cellulose partially etherified, thereby weakening the hydrogen bonds in the intra-molecule and inter-molecule of cellulose. Since it is industrially difficult to perform etherification in a perfectly uniform manner, HPMC may contain parts that are insoluble in water, i.e., the insoluble fibers, due to an insufficient degree of substitution of ether groups or an ununiform substitution of ether groups. If HPMCAS contains a large number of insoluble fibers in the final product, the yield of an enteric coating preparation will decrease due to an ununiform enteric film, or productivity will decline as filter clogging will frequently occur in a filtration step of the coating solution; it is therefore preferred that HPMC as a raw material of HPMCAS have a small number of insoluble fibers. The number of insoluble fibers may be calculated by analyzing the HPMC aqueous solution with the aid of a device such as a Coulter counter.

It is noted that with respect to HMPC, the DS of methoxy groups as used herein refers to a degree of substitution of the methoxy groups, which is an average number of methoxy groups per number of anhydroglucose unit, and the MS of hydroxypropoxy groups refers to a molar substitution of the hydroxypropoxy groups, which is an average number of moles of hydroxypropoxy groups per mole of anhydroglucose. The DS of methoxy groups and the MS of hydroxypropoxy groups of HPMC may be determined based on the converted values of the values obtained by the respective measurements performed in accordance with the Japanese Pharmacopoeia 18^{th} Edition.

It is preferred in terms of kneadability in performing the esterification reaction that the viscosity at 20°C of a 2% by mass aqueous solution of HPMC be 2.2 to 7.2 mPa·s, more preferably 3.0 to 3.5 mPa·s.

The viscosity at 20°C of a 2% by mass aqueous solution of HPMC may be determined in accordance with the viscosity measurement by capillary tube viscometer as stipulated in the Japanese Pharmacopoeia 18^{th} Edition.

It is preferred in terms of economical perspective that the catalyst for use in the esterification reaction step be an alkali metal carboxylate such as sodium acetate. It is preferred in terms of the composition (degree of substitution) and yield of the resultant HPMCAS that the catalyst be contained in such an amount that a molar ratio thereof to the raw material HPMC is 0.1 to 1.5, more preferably 0.6 to 1.1.

Examples of the acetylating agent for use as an esterification agent in the esterification reaction step include acetic anhydride and acetyl chloride, among which acetic anhydride is preferred in terms of economical perspective.

It is preferred in terms of the composition (degree of substitution) and yield of the resultant HPMCAS that the acetylating agent be contained in such an amount that a molar ratio thereof to the raw material HPMC is 0.1 to 1.5, more preferably 1.1 to 1.3.

Examples of the succinoylating agent for use as an esterification agent in the esterification reaction step include succinic anhydride and succinyl chloride, among which succinic anhydride is preferred in terms of economical perspective.

It is preferred in terms of the composition (degree of substitution) and yield of the resultant HPMCAS that the succinoylating agent be contained in such an amount that a molar ratio thereof to the raw material HPMC is 0.1 to 1.0, more preferably 0.3 to 0.5.

The esterification reaction step may be carried out in the presence of a solvent which is preferably the one capable of dissolving HPMC, an esterification agent, and a catalyst, and examples of such solvent include acetic acid, propionic acid, and butyric acid, among which acetic acid is preferred in terms of economical perspective. It is preferred in terms of reaction rate that the solvent be used in such an amount that a mass ratio thereof to the mass of the HPMC is 1.0 to 3.0, more preferably 1.2 to 2.0, and even more preferably 1.5 to 1.8.

Examples of the reactor to be used for esterification reaction in the esterification reaction step include, for example, a twin-shaft mixer capable of mixing a high-viscosity fluid to make a uniform mixture. Specifically, there may be used a commercially marketed mixer such as the one called under the name of a kneader and an internal mixer.

It is preferred in terms of reaction speed or viscosity increment that the reaction temperature in the esterification reaction step be 60 to 100°C, more preferably 80 to 90°C. It is also preferred in terms of obtaining HPMCAS having a desired degree of substitution that the reaction time of the esterification reaction step be 2 to 8 hours, more preferably 3 to 6 hours.

After the esterification reaction is over, water may be added to the reaction solution for the purpose of treating the unreacted acetylating agent and succinoylating agent (the mixing treatment with water after performing the esterification reaction is also referred to as "post-treatment"). The amount of water to be added into the reaction solution in the esterification reaction step for the purpose of post-treatment is in such an amount that a mass ratio thereof to the mass of the HPMC is preferably 0.8 to 1.5, more preferably 1.0 to 1.3.

### [Precipitation step]

In the precipitation step, the reaction solution obtained in the esterification reaction step is mixed with water to obtain an HPMCAS suspension by precipitating crude HPMCAS.

It is preferred in terms of precipitation degree and treating time of HPMCAS that water be mixed in the precipitation step with the reaction solution in such an amount that a mass ratio thereof to the mass of HPMC used in the esterification reaction is 8.0 to 50.0, more preferably 12.0 to 35.0.

It is also preferred, in terms of controlling the particle diameter of HPMCAS particles in the HPMCAS suspension, that the water mixed with the reaction solution in the precipitation step have a temperature of 0 to 40°C, more preferably of 0 to 30°C.

Further, it is also preferred, in terms of controlling the particle diameter of HPMCAS particles in the HPMCAS suspension, that the reaction solution immediately before being mixed with water have a temperature of 10 to 80°C, more preferably of 10 to 50°C.

It is preferred, in terms of reducing water content in the liquid-removed HPMCAS after a liquid removal step to be explained below, that the suspended particles in the HPMCAS suspension obtained in the precipitation step have a mean particle diameter of larger than or equal to 150 µm, more preferably of 150 to 4000 µm, and even more preferably of 150 to 2000 µm. The esterification reaction step and precipitation step may be carried out under the conditions described above for making the suspended particles have a mean particle diameter within the above range.

The mean particle diameter of the HPMCAS particles in the suspension, containing the precipitated HPMCAS particles, may be measured by the wet sieving test as set forth in Japanese Industrial Standard JIS Z 8815. That is, when the cumulative mass fractions (%) on sieves of the respective sieve opening sizes are plotted against the sieve opening sizes (µm), where the horizontal axis represents the sieve opening size (µm) and the vertical axis represents the cumulative mass fraction (%) on sieves, the mean particle diameter of HPMCAS particles is determined as the value of sieve opening size at the intersection between the line of the 50% the cumulative mass fraction on sieves and a straight line connecting the two plotted points sandwiching the line of the 50% cumulative mass fraction on sieves. The cumulative mass fractions (%) on sieves may be calculated from the masses of HPMCAS particles that remain on the sieves after poring the suspension, containing the precipitated HPMCAS particles, into the sieves and then poring pure water into the HPMCAS particles until the liquid, having passed through the sieves, becomes transparent to thereby transfer the particles into the respective containers for measuring the mass.

The HPMCAS suspension obtained in the precipitation step may have any concentration (i.e. weight proportion of suspended particles per unit weight of suspension) which is not particularly limited, but it is preferred from the standpoint of, for example, cohesiveness of suspended particles in the subsequent liquid removal step that the concentration be equal to or less than 20% by weight, more preferably equal to or less than 15% by weight. The HPMCAS suspension to be obtained in the precipitation step may have a concentration whose lower limit is not particularly limited but it is preferred in terms of productivity that the limit be 0.1% by mass. The amount of water to be added in the precipitation step may be suitably adjusted so that the HPMCAS suspension has a concentration within the above range. For example, the amount of water in the suspension may be suitably adjusted before it is subjected to the liquid removal step so that the HPMCAS suspension has a concentration within the above range.

Further, it is preferred from the standpoint of, for example, cohesiveness of suspended particles in the subsequent liquid removal step that the HPMCAS suspension obtained in the precipitation step have a temperature adjusted to 80°C or lower, more preferably to 60°C or lower, and even more preferably to 40°C or lower before it is subjected to the liquid removal step. The HPMCAS suspension may have any temperature whose lower limit is not particularly limited but it is preferred in terms of handleability that the lower limit be 0°C.

### [Washing step]

The resultant HPMCAS suspension may contain remaining impurities including salts, free acetic acid, and free succinic acid. The use of a screw press also helps to improve cleaning effect, and it is therefore possible to directly use the screw press to remove liquid from the resultant HPMCAS suspension. However, a washing step may further be introduced as necessary between the precipitation step and the liquid removal step, where the washing step is a step of washing crude HPMCAS in the HPMCAS suspension obtained in the precipitation step to give an HPMCAS suspension to be used in the liquid removal step.

The HPMCAS suspension may be washed by a method of, for example, removing water from the HPMCAS suspension using a technique such as filtration, and then suspending the HPMCAS again into a clean solvent. In the washing step, the removal of water from the HPMCAS suspension using, for example, filtration and resuspension into a solvent may be repeated multiple times.

Examples of the solvent for use in washing HPMCAS include water.

This washing step typically involves washing crude HPMCAS by, for example, water using a filtration apparatus such as a batch-type stirring filtration apparatus, a continuous type rotary pressure filtration apparatus, a continuous type horizontal vacuum filtration apparatus, a horizontal filter table filtration apparatus, or a horizontal belt filtration apparatus.

It is preferred that the HPMCAS suspension for use in the liquid removal step and obtained after the washing step have a mean particle diameter of the suspended particles and a concentration and temperature of the HPMCAS suspension which are all the same as those of the HPMCAS suspension obtained in the precipitation step.

Water may be appropriately added thereinto after the washing step so that the HPMCAS suspension that is obtained after the washing step and used in the liquid removal step has a concentration within the above range.

### [Preliminary liquid removal step]

The present method may include a preliminary liquid removal step in which the HPMCAS suspension is subjected to liquid removal using, if necessary, a dehydrator between the washing step and the liquid removal step or, when the washing step is not performed, between the precipitation step and the liquid removal step for reducing the water content of the liquid-removed HPMCAS obtained by the liquid removal step to prepare a preliminarily liquid-removed HPMCAS.

A dehydrator such as a centrifugal dehydrator or a decanter-type centrifugal separator may normally be used in this preliminary liquid removal step.

The preliminarily liquid-removed HPMCAS may have any water content which is not particularly limited but it is preferred in terms of obtaining a liquid-removed HPMCAS having low water content in the subsequent liquid removal step using a screw press that the water content be 75% by mass or less, more preferably 65% by mass or less, and it is also preferred in terms of productivity or other perspective that that water content be above 60% by mass.

In addition, the degree of preliminary liquid removal may be adjusted, or water may be added appropriately after the preliminary liquid removal step so that the preliminarily liquid-removed HPMCAS obtained after the preliminary liquid removal step and to be used in the liquid removal step has a water content within the above range.

The preliminarily liquid-removed HPMCAS obtained after the preliminary liquid removal step and to be used in the liquid removal step preferably has a mean particle diameter of the particles and a temperature that are similar to those of the HPMCAS suspension obtained in the precipitation step.

### [Liquid removal step]

The liquid removal step of removing a liquid from HPMCAS suspension or preliminarily liquid-removed HPMCAS using a screw press will be performed after the precipitation step, the washing step, or the preliminary liquid removal step.

No study has ever discussed a production method for HPMCAS that employs a screw press in the liquid removal step. This is because it has been considered that the HPMCAS particles receive a strong shear force during the liquid removal step, making it difficult to obtain particles with desirable physical properties as a powder. Nevertheless, the inventors have surprisingly found that using a screw press to strongly remove liquid from an HPMCAS suspension enables the continual and stable supply of high-density HPMCAS particles, which had been impossible to achieve with conventional techniques. Such high-density HPMCAS particles has a pore volume which is extremely small, which not only achieves improvement in the mixing uniformity with drugs for hot melt extrusion and minimizes bubble formation during the preparation of solution, but also promotes shipping efficiency of HPMCAS products owing to their high density. In addition, the liquid removal process using a screw press is superior to processes using other types of dehydrators in terms of, for example, energy efficiency, continuous production capacity, ease of maintenance, and its ability to remain unaffected by the conditions of the wet powder or suspension from which a liquid is to be removed. Consequently, this method allows HPMCAS to be produced in a highly efficient manner.

The screw press refers to a machine for performing solid-liquid separation using a compressing force produced with the aid of variation in volume that varies from a supply region of the dewatering raw material to a discharge region of the dewatered product. FIG. 1 is a schematic view illustrating an example of a screw press for use in the liquid removal step.

The screw press 1 is comprised of a substantially cylindrical filtration cylinder 2 having a plurality of pores formed by, for example, a punching process or slits for discharging a liquid component and a screw concentrically arranged inside the filtration cylinder 2, where the screw is comprised of a screw shaft 4 and a screw blade 3 welded thereon around the shaft 4. The screw shaft 4 has a volume that progressively expands from the supply region 5 of the dewatering raw material toward the discharge region 8 of the dewatered product. The screw 4 shaft allows a liquid or gas to run through from a temperature control liquid supplying port 6 to a temperature control liquid discharging port 10 to control the temperature. Further, the screw shaft 4 includes a straight region 12 where no screw blade 3 is provided at a section before the discharge region 8 of the liquid-removed product for the purpose of prolonging the residence time of the dewatering raw material A in the apparatus to enhance dewatering efficacy. That is, the dewatering raw material A , transported while being dewatered by volume variation from the supply region of the dewatering raw material toward the discharge region of the dewatered product, resides at the straight region 12 where no screw blade 3 is provided, which causes the dewatering raw material A, subsequently transported from the supply region 5 of the dewatering raw material, to be pressurized from the side of the discharge region 8 of the dewatered product, thus allowing the dewatered product B to further reduce its water content. The straight region 12 whose length is also referred to as the "straight length" or "plug length" can have its length adjusted by moving the screw, which is parallelly movable along the main axis. The discharge region 8 of the dewatered product has a back pressure plate 11 that has a shape of a circular truncated cone and is concentrically arranged around the screw shaft 4. The back pressure plate 11 allows for a controlled opening degree and can apply pressure (hereafter also referred to as "back pressure") using a pneumatic cylinder 9, from the discharge region 8 of the dewatered product toward the supply region 5 of the dewatering raw material. Pressate C is a liquid component squeezed off by the screw press 1 and passes through the pores in the filtration cylinder 2 and is discharged via a pressate discharging portion 7.

Examples of such screw press include an FKC screw press (manufactured by Fukoku Kogyo Co., Ltd.), an ISGK V-type hybrid pressure-fit screw press (manufactured by ISHIGAKI COMPANY, LTD), and a YSP type screw press dehydrator (manufactured by Yamato Sangyo Co., Ltd.).

A method for removing a liquid from HPMCAS suspension or preliminarily liquid-removed HPMCAS using a screw press will be explained based on a screw press 1 as illustrated in FIG. 1.

First, a screw that intends to achieve a desired compression ratio is selected as appropriate.
The term "compression ratio" of the screw refers to the ratio of the cross-sectional area of the space between the inner wall of the filtration cylinder 2 and the screw shaft 4 at its smallest diameter to the cross-sectional area of the space between the inner wall of the filtration cylinder 2 and the screw shaft 4 at its largest diameter.

Next, the desired screw rotation speed, straight length, back pressure plate opening degree, back pressure, and screw shaft inlet temperature are set. After the setting is completed, the screw press 1 is put in operation to rotate the screw shaft 4. After the screw rotation speed reached a desired rotation speed, an HPMCAS suspension or preliminarily liquid-removed HPMCAS is placed thereinto as a dewatering raw material A from the supply region 5 of the dewatering raw material. The dewatering raw material A supplied from the supply region 5 of the dewatering raw material undergoes a gravity filtration through pores in the filtration cylinder 2 located immediately below the supply region 5 of the dewatering raw material A by which a liquid component is partially separated from solid. The dewatering raw material A from which a liquid component is partially separated is transferred by a rotating screw toward the discharge region 8 of the dewatered product. The liquid removal during this process is carried out by the variation in volume thereof that varies from the supply region 5 of the dewatering raw material toward the discharge region 8 of the dewatered product. The dewatered product B is a liquid-removed HPMCAS which is in the form of wet powder or wet aggregate and falls off from the discharge region 8 of the dewatered product by its own weight or the product B collides with the back pressure plate 11 to be coarsely crushed and then falls off from the discharge region 8 of the dewatered product. The pressate C-a liquid component separated from solid-is discharged through pores in the filtration cylinder 2 and is collected from the pressate discharging portion 7.

It is preferred in terms of obtaining liquid-removed HPMCAS of low water content while maintaining a high level of production efficiency that the screw rotation speed be 0.1 to 6 rpm, more preferably 0.2 to 3 rpm.

A high level of screw shaft inlet temperature not only reduces water viscosity in the HPMCAS suspension but also softens HPMCAS, which promotes liquid removal from within the HPMCAS suspended particles. However, the particle shape of HPMCAS, which is a thermoplastic material, is no longer maintained. Meanwhile, a low level of screw shaft inlet temperature not only increases the viscosity of water in the HPMCAS suspension but also causes water to freeze which risks a breakage of the apparatus. It is preferred from the above-mentioned perspective that the screw shaft inlet temperature be 0 to 80°C, more preferably 10 to 70°C, and even more preferably 10 to 60°C.

The straight length may be any length which is not particularly limited but it is preferred in terms of obtaining liquid-removed HPMCAS having low water content that the straight length be 0 to 300 mm, more preferably 50 to 200 mm.

The compression ratio may take any value which is not particularly limited but it is preferred in terms of obtaining liquid-removed HPMCAS having low water content that the compression ratio be 1.1 to 3.0, more preferably 1.1 to 2.0.

The back pressure may take any value which is not particularly limited but it is preferred in terms of obtaining liquid-removed HPMCAS having low water content that the back pressure be 0 to 0.5 MPa, more preferably 0 to 0.4 MPa, and even more preferably 0.1 to 0.4 MPa. The opening degree of the back pressure plate that is too narrow fails to discharge a dewatered product, and therefore it is preferred that the back pressure plate be open to the extent of 10 mm or greater.

It is preferred in terms of drying efficiency that the liquid-removed HPMCAS obtained after the liquid removal step have a water content of, although not limited to the following, 5 to 90% by mass, more preferably 10 to 80% by mass, even more preferably 15 to 70% by mass, particularly preferably 20 to 60% by mass, and most preferably 25 to 35% by mass. The water content of the liquid-removed HPMCAS may be determined in accordance with the procedure described in "Loss on Drying Test" under "2. Physical Methods" in "General Tests" of the Japanese Pharmacopoeia 18^{th} Edition. More specifically, the water content of HPMCAS is defined as {(Total mass of HPMCAS - Absolute dry mass of HPMCAS)/(Total mass of HPMCAS)} × 100%, wherein the term "Total mass of HPMCAS" refers to the mass of HPMCAS which is precisely determined in accordance with the procedure described in "Loss on Drying Test" in the Japanese Pharmacopoeia 18^{th} Edition. Further, the term "Absolute dry mass of HPMCAS" refers to the mass of HPMCAS which was dried in accordance with the procedure described in "Loss on Drying Test" in the Japanese Pharmacopoeia 18^{th} Edition.

Here, when determining the "water content of the liquid-removed HPMCAS", the "Water content of the liquid-removed HPMCAS" may be determined or calculated in accordance with the above-defined formula in such a manner that the term "HPMCAS" is replaced with the term "liquid-removed HPMCAS". The water content of HPMCAS in each step, including the water content of the dried HPMCAS described below, may also be determined in a similar manner.

### [Pulverizing step]

The liquid-removed HPMCAS is obtained as a caked product depending on the operating conditions of the screw press. In this case, the product needs to be pulverized or disintegrated into a granular form that has a greater specific surface area and a higher level of flowability for efficiently performing the subsequent drying step. In the pulverizing step, the liquid-removed HPMCAS obtained in the liquid removal step is pulverized by a pulverizer to obtain pulverized HPMCAS.

It is preferred in terms of obtaining pulverized HPMCAS of desired grain size that the pulverizer for use in the pulverizing step be, although not limited to the following, a cone crusher, an impact crusher, a hammer mill, or a feather mill.

It is preferred in terms of powder flowability that the pulverized HPMCAS have a median particle diameter (D50) of 70 to 5000 µm, more preferably 150 to 3000 µm, and even more preferably 300 to 1500 µm. The median particle diameter (D50) of pulverized HPMCAS may be determined by dry laser diffraction method (using, for example, a Mastersizer manufactured by Malvern Panalytical Ltd. in the UK).

### [Drying step]

In the drying step, the pulverized HPMCAS obtained in the pulverizing step is dried until it reaches a desired water content (for example, 0.1 to 5.0% by mass).

There may be used any drying temperature which is not particularly limited but it is preferred in terms of drying efficacy and discoloration (quality) of the dried product that the temperature range be room temperature (20 ± 15°C) to 120°C, more preferably 50 to 90°C.

Examples of such dryers include, but are not particularly limited to, a fluid-bed dryer and a flash dryer.

### [Hydroxypropyl methylcellulose acetate succinate]

The degree of substitution of HPMCAS, as obtained by the method of the present invention, will be discussed.

The DS of methoxy groups of HPMCAS is preferably 1.10 to 2.20, more preferably 1.40 to 2.00, and even more preferably 1.60 to 2.00.

The MS of hydroxypropoxy groups of HPMCAS is preferably 0.10 to 1.00, more preferably 0.20 to 0.80, and even more preferably 0.20 to 0.65.

The DS of acetyl groups of HPMCAS is preferably 0.10 to 2.50, more preferably 0.10 to 1.00, and even more preferably 0.20 to 0.80.

The DS of succinyl groups of HPMCAS is preferably 0.10 to 2.50, more preferably 0.10 to 1.00, and even more preferably 0.10 to 0.60.

It is preferred in terms of solubility that the ratio of the DS of acetyl groups to the DS of succinyl groups in HPMCAS (acetyl groups/succinyl groups) be 0.50 to 4.00, more preferably 0.80 to 3.70.

The DSs of methoxy groups, acetyl groups, and succinyl groups of HPMCAS represent the degrees of substitutions, and refer to the average numbers of the methoxy groups, acetyl groups and succinyl groups, respectively, per number of anhydroglucose unit. The MS of hydroxypropoxy groups of HPMCAS represents a molar substitution of hydroxypropoxy groups, and refers to the average mole number of hydroxypropoxy groups per 1 mol of anhydroglucose.

The DSs of methoxy groups, acetyl groups, and succinyl groups of HPMCAS, and the MS of hydroxypropoxy groups of HPMCAS may be calculated by converting the values obtained in accordance with the method in the monographs "Hypromellose acetate ester succinate ester" of the Japanese Pharmacopoeia 18^{th} Edition.

It is preferred in terms of powder flowability and drug mixability that the HPMCAS obtained in this manner have a median particle diameter (D50) of 70 to 2000 µm, more preferably 150 to 1750 µm, and even more preferably 300 to 1500 µm. The median particle diameter (D50) of HPMCAS may be determined by dry laser diffraction method (using, for example, a Mastersizer manufactured by Malvern Panalytical Ltd. in the UK).

The HPMCAS obtained by the production method of the present invention exhibits an enhanced loose bulk density with reduced pore volume, which enables the minimization of bubble formation when HPMCAS and a solvent are mixed and stirred.

The loose and tapped bulk densities of the HPMCAS obtained in this way will be explained.

It is preferred in terms of minimizing bubble formation that the HPMCAS obtained in this manner have a loose bulk density of 0.3 to 0.85 g/cm³, more preferably from above 0.6 to 0.85 g/cm³. The term "Loose bulk density" refers to a bulk density in a loosely packed state, and is measured by uniformly supplying a sample through a 24-mesh sieve into a cylindrical container having a diameter of 5.03 cm and a height of 5.03 cm (volume: 100 ml) from 23 cm above the cylindrical container, and leveling the supplied sample at the top face of the container for weighing.

It is preferred in terms of minimizing bubble formation that the HPMCAS have a tapped bulk density of 0.3 to 0.90 g/cm³, more preferably from above 0.6 to 0.9 g/cm³. The term "tapped bulk density" refers to a bulk density in the state where a sample is closely packed by tapping. The term "tapping" refers to an operation in which a cylindrical container filled with a sample is repeatedly dropped from a predetermined height to apply a light impact to the bottom of the container, thereby closely packing the sample in the container. Specifically, as is the case of measuring the "loose bulk density", a sample is supplied into the cylindrical container, and the supplied sample is leveled at the top face of the container for weighing, and then the cylindrical container is capped at the top with a cap, after which the cap is filled with the sample up to the upper edge of the cap, and subjected to 180 times of tapping from a tap height of 1.8 cm. After the tapping has been completed, the cap is removed from the container, and then the sample is leveled at the top face of the container for weighing. The bulk density of this state is determined as the tapped bulk density.

A powder tester manufactured by Hosokawa Micron Corporation may be used for measuring the "loose bulk density" and the "tapped bulk density".

It is preferred that the dried product of HPMCAS obtained in this manner have a specific surface area of 0.5 to 5.0 m²/g, more preferably 0.5 to 3.0 m²/g from the perspective of minimizing bubble formation when the product is solubilized. The specific surface area may be measured using a method of determining the specific surface area of a sample from the adsorption amount, where the surfaces of the sample powder particles adsorb each molecule having a known adsorption-occupied area at a temperature of liquid nitrogen (-196°C). The BET method (BET multipoint measurement) using low-temperature low humidity physical adsorption of an inert gas can be used. Specifically, an automated specific surface area and pore distribution analyzer TriStar II 3020 (product of Micromeritics) can be used for the measurement.

### WORKING EXAMPLES

The present invention is described in detail hereunder with reference to working and comparative examples; the present invention shall not be limited in any way to the following working examples.

### Working Example 1

Here, 12 kg of glacial acetic acid was weighed and put into a 50L kneader equipped with a twin-shaft mixer into which 7.5 kg of hydroxypropyl methylcellulose whose DS of methoxy groups was 1.87, whose MS of hydroxypropoxy groups was 0.24, and whose 2% by mass aqueous solution had a viscosity of 3.4 mPa·s at 20°C was added to be dissolved therein. Next, 2.3 kg of succinic anhydride, 4.3 kg of acetic anhydride, and 3.6 kg of sodium acetate were added to this 50L kneader to react them for 5 hours at 85°C. Then, 8.4 kg of water was added into the reaction solution inside the 50L kneader and stirred to obtain a reaction solution.

Water (at 20°C) was gradually added to the reaction solution at 40°C in an amount 20 times the mass of HPMC to precipitate crude HPMCAS, thus resulting in an HPMCAS suspension.

The crude HPMCAS in the HPMCAS suspension was filtrated on a horizontal filter table filtration apparatus, washed by water, and the resultant HPMCAS was mixed with water to obtain an HPMCAS suspension-1 having an HPMCAS concentration of 6% by mass at 12°C.

A screw press (FKC screw press of SHX-200 × 1500L manufactured by Fukoku Kogyo Co., Ltd.) was used to remove liquid from (perform solid-liquid separation on) the HPMCAS suspension-1 under the conditions of screw rotation speed of 2 rpm, screw shaft inlet temperature of 13°C, back pressure plate opening degree of 20 mm, back pressure of 0 MPa, and straight length of 50 mm, thus resulting in liquid-removed HPMCAS. The liquid-removed HPMCAS had a water content of 55.21% by mass.

Next, the resultant liquid-removed HPMCAS was pulverized using a Feather mill (FM-1F, manufactured by Hosokawa Micron Corporation) at the rotation speed of 3833 rpm and a mesh size Φ of 5.0 mm to obtain pulverized HPMCAS.

Then, the resultant pulverized HPMCAS was dried at 80°C using a fluid-bed dryer until it reached a water content below 5% after the drying step to obtain dried HPMCAS. The drying time of the pulverized HPMCAS was 0.8 per 1.00 of the drying time of the liquid-removed HPMCAS in Comparative Example 1 which used a centrifugal filtration dehydrator for removing the liquid.

Subsequently, the resultant dried HPMCAS was filtrated through a sieve of 7.5 mesh (opening size of 2360 µm).

The resultant HPMCAS exhibited degrees of substitution, where the DS of methoxy groups was 1.87, the MS of hydroxypropoxy groups was 0.24, the DS of acetyl groups was 0.46, and the DS of succinyl groups was 0.38.

20.4 g of the resultant HPMCAS was added to 175 g of purified water in a stirring container and dispersed by stirring it at a rate of 300 rpm for 5 minutes. 5.07 g of 10% aqueous ammonia solution required to neutralize the carboxyl groups in the HPMCAS was added thereinto, which was further stirred at 700 rpm for 150 minutes and then the operation of stirring blades was stopped. The resultant HPMCAS aqueous ammonia solution was left to stand for 30 minutes to calculate the volume of bubbles based on the height of bubbles at the upper portion of the solution level and the cross section of the stirring container. The volume of bubbles thus produced was 0.7 per 1.00 of the volume of bubbles of the aqueous ammonia solution prepared using the HPMCAS of Comparative Example 1 from which a liquid had been removed using a centrifugal filtration dehydrator.

Additionally, the methods previously described were employed for the HPMCAS after having been sieved to respectively determine the median particle diameter (D50), loose bulk density, tapped bulk density, and specific surface area (these properties will henceforth be collectively referred to as "powder physical properties".) The results are as shown in Table 1.

### Working Example 2

HPMCAS was obtained by performing similar operations as in Working Example 1 except that the conditions for liquid removal using a screw press were adjusted to a back pressure of 0.4 MPa and a rotation speed of 0.25 rpm.

The drying time of the pulverized HPMCAS was 0.41 per 1.00 of the drying time of the liquid-removed HPMCAS in Comparative Example 1 which used a centrifugal filtration dehydrator for removing the liquid.

The volume of bubbles produced when the aqueous ammonia solution of HPMCAS was prepared was 0.4 per 1.00 of the volume of bubbles of the aqueous ammonia solution prepared using the HPMCAS of Comparative Example 1.

After being sieved, the HPMCAS underwent various examinations for powder physical properties, and the results are as shown in Table 1.

### Working Example 3

HPMCAS was obtained by performing similar operations as in Working Example 2 except that the pulverizing conditions using a feather mill were adjusted to a mesh size Φ of 3.0 mm.

The drying time of the pulverized HPMCAS was 0.40 per 1.00 of the drying time of the liquid-removed HPMCAS in Comparative Example 1 which used a centrifugal filtration dehydrator for removing the liquid.

The volume of bubbles produced when the aqueous ammonia solution of HPMCAS was prepared was 0.4 per 1.00 of the volume of bubbles of the aqueous ammonia solution prepared using the HPMCAS of Comparative Example 1.

After being sieved, the HPMCAS underwent various examinations for powder physical properties, and the results are as shown in Table 1.

### Working Example 4

HPMCAS was obtained by performing similar operations as in Working Example 1 except that the conditions for liquid removal using a screw press were adjusted to a screw rotation speed of 1 rpm and a screw shaft inlet temperature of 30°C.

The drying time of the pulverized HPMCAS was 0.33 per 1.00 of the drying time of the liquid-removed HPMCAS in Comparative Example 1 which used a centrifugal filtration dehydrator for removing the liquid.

The volume of bubbles produced when the aqueous ammonia solution of HPMCAS was prepared was 0.3 per 1.00 of the volume of bubbles of the aqueous ammonia solution prepared using the HPMCAS of Comparative Example 1.

After being sieved, the HPMCAS underwent various examinations for powder physical properties, and the results are as shown in Table 1.

### Working Example 5

HPMCAS was obtained by performing similar operations as in Working Example 2 except that a Victory mill was used as a pulverizer.

The drying time of the pulverized HPMCAS was 0.44 per 1.00 of the drying time of the liquid-removed HPMCAS in Comparative Example 1 which used a centrifugal filtration dehydrator for removing the liquid.

The volume of bubbles produced when the aqueous ammonia solution of HPMCAS was prepared was 0.4 per 1.00 of the volume of bubbles of the aqueous ammonia solution prepared using the HPMCAS of Comparative Example 1.

After being sieved, the HPMCAS underwent various examinations for powder physical properties, and the results are as shown in Table 1.

### Working Example 6

HPMCAS was obtained by performing similar operations as in Working Example 2 except that a Force mill was used as a pulverizer.

The drying time of the pulverized HPMCAS was 0.47 per 1.00 of the drying time of the liquid-removed HPMCAS in Comparative Example 1 which used a centrifugal filtration dehydrator for removing the liquid.

The volume of bubbles produced when the aqueous ammonia solution of HPMCAS was prepared was 0.4 per 1.00 of the volume of bubbles of the aqueous ammonia solution prepared using the HPMCAS of Comparative Example 1.

After being sieved, the HPMCAS underwent various examinations for powder physical properties, and the results are as shown in Table 1.

### Working Example 7

Here, 12 kg of glacial acetic acid was weighed and put into a 50L kneader equipped with a twin-shaft mixer into which 7.5 kg of hydroxypropyl methylcellulose whose DS of methoxy groups was 1.89, whose MS of hydroxypropoxy groups was 0.24, and whose 2% by mass aqueous solution had a viscosity of 3.4 mPa·s at 20°C was added to be dissolved therein. Next, 0.8 kg of succinic anhydride, 5.3 kg of acetic anhydride, and 3.5 kg of sodium acetate were added to this 50L kneader to react them for 5 hours at 85°C. Then, 8.4 kg of water was added into the reaction solution inside the 50L kneader and stirred to obtain a reaction solution.

Water (at 20°C) was gradually added to the reaction solution at 40°C in an amount 20 times the mass of HPMC to precipitate crude HPMCAS, thus resulting in an HPMCAS suspension.

The crude HPMCAS in the HPMCAS suspension was filtrated by a horizontal filter table filtration apparatus, washed by water, and the resultant HPMCAS was mixed with water to obtain an HPMCAS suspension-2 having an HPMCAS concentration of 6% by mass at 12°C.

A screw press (FKC screw press of SHX-200 × 1500L manufactured by Fukoku Kogyo Co., Ltd. with the compression ratio of 1.4) was used to remove liquid from (perform solid-liquid separation on) the HPMCAS suspension-2 under the conditions of screw rotation speed of 2 rpm, screw shaft inlet temperature of 55°C, back pressure plate opening degree of 20 mm, back pressure of 0 MPa, and straight length of 50 mm, thus resulting in liquid-removed HPMCAS. The liquid-removed HPMCAS had a water content of 25.01% by mass.

Next, the resultant liquid-removed HPMCAS was pulverized using a Feather mill (FM-1F, manufactured by Hosokawa Micron Corporation) at the rotation speed of 3833 rpm and a mesh size Φ of 5.0 mm to obtain pulverized HPMCAS.

After that, the resultant pulverized HPMCAS was dried at 80°C using a fluid-bed dryer until it reached a water content below 5% by mass after the drying step to obtain dried HPMCAS. The drying time of the pulverized HPMCAS was 0.32 per 1.00 of the drying time of the liquid-removed HPMCAS in Comparative Example 1 which used a centrifugal filtration dehydrator for removing the liquid.

Subsequently, the resultant dried HPMCAS was filtrated through a sieve of 7.5 mesh (opening size of 2360 µm).

The resultant HPMCAS exhibited degrees of substitution, where the DS of methoxy groups was 1.87, the MS of hydroxypropoxy groups was 0.23, the DS of acetyl groups was 0.66, and the DS of succinyl groups was 0.18.

20.4 g of the resultant HPMCAS was added to 178 g of purified water in a stirring container and dispersed by stirring it at a rate of 300 rpm for 5 minutes. 2.57 g of 10% aqueous ammonia solution required to neutralize the carboxyl groups in the HPMCAS was added thereinto, which was further stirred at 700 rpm for 150 minutes and then the operation of stirring blades was stopped. The resultant HPMCAS aqueous ammonia solution was left to stand for 30 minutes to calculate the volume of bubbles based on the height of bubbles at the upper portion of the solution level and the cross section of the stirring container. The volume of bubbles thus produced was 0.4 per 1.00 of the volume of bubbles of the aqueous ammonia solution prepared using the HPMCAS of Comparative Example 1

After being sieved, the HPMCAS underwent various examinations for powder physical properties, and the results are as shown in Table 1.

### Comparative Example 1

A centrifugal dehydrator (upper discharge type centrifugal separator, type H-130A, manufactured by KOKUSAN Co., Ltd.) was used in place of a screw press to remove liquid from the HPMCAS suspension-1 obtained in Working Example 1 at a centrifugal effect of 1200 G. The liquid removal operation was further continued for 2 minutes after confirming that no more drainage liquid was being discharged from the drain port of the dehydrator. The liquid removal operation was performed for another 2 minutes but the water content was not decreased, so the liquid removal step was completed and as the result, liquid-removed HPMCAS having a water content of 67.8% by mass was obtained. HPMCAS was obtained by performing similar operations as in Working Example 1 except that the resultant liquid-removed HPMCAS was dried without subjecting it to the pulverizing step.

The volume of bubbles was calculated in a manner similar to the one of Working Example 1 based on the height of the bubbles and the cross section of the stirring container.

After being sieved, the HPMCAS underwent various examinations for powder physical properties, and the results are as shown in Table 1.

### Comparative Example 2

HPMCAS was obtained by performing similar operations as in Working Example 1 except that a centrifugal dehydrator as described in Comparative Example 1 was used in place of a screw press.

The drying time of the pulverized HPMCAS was 0.98 per 1.00 of the drying time of the liquid-removed HPMCAS in Comparative Example 1 which used a centrifugal filtration dehydrator for removing the liquid.

The volume of bubbles produced when the aqueous ammonia solution of HPMCAS was prepared was 1.0 per 1.0 of the volume of bubbles of the aqueous ammonia solution prepared using the HPMCAS of Comparative Example 1.

After being sieved, the HPMCAS underwent various examinations for powder physical properties, and the results are as shown in Table 1.

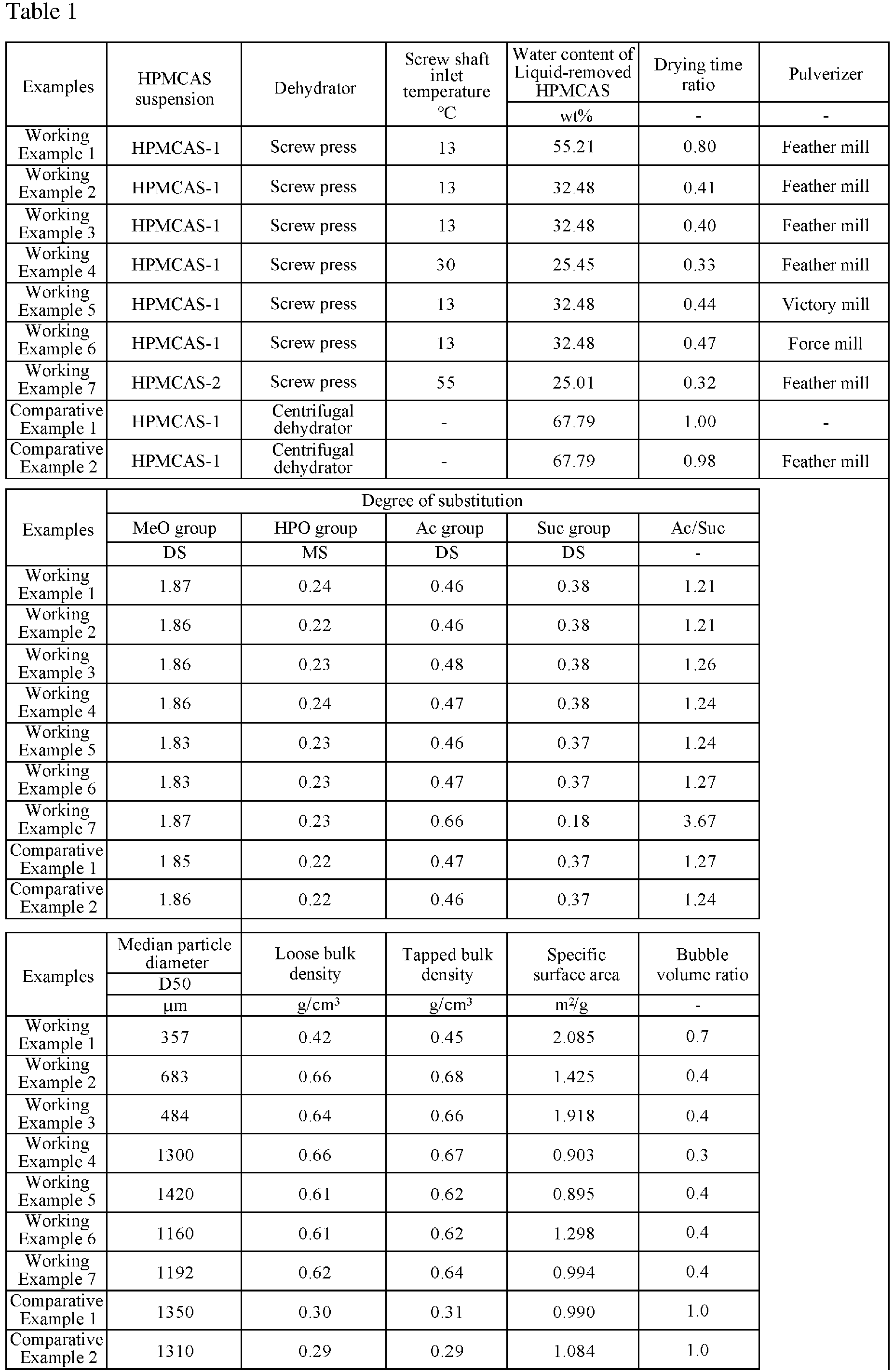

The results of Working Examples 1 to 7 and Comparative Examples 1 to 2 indicate that the use of a screw press for removing a liquid from the HPMCAS suspension and the subsequent pulverization shortened the drying time of HPMCAS. The physical properties as powder of the resultant HPMCAS varied significantly depending on the type of dehydrator used during the liquid removal step. Notably, the use of HPMCAS obtained by the production method of the present invention demonstrated a reduction in the volume of bubbles formed when the solution was prepared.

Further, the results from Working Examples 2 and 3 demonstrate that the median particle diameter of HPMCAS can be controlled by adjusting the mesh size of a pulverizer.

Furthermore, the results from Working Examples 1 and 4 demonstrate that the water content of the liquid-removed HPMCAS can be significantly reduced by increasing the screw shaft inlet temperature of a screw press.

In addition, the results from Working Examples 2, 5, and 6 demonstrate that using a pulverizer other than a feather mill can also achieve effects similar to those obtained with a feather mill.

Finally, the results from Working Examples 1 and 7 demonstrate that changing the amount of esterification agent used in the esterification reaction step and varying the degree of substitution of the resultant HPMCAS can also result in a shortened drying time of HPMCAS and reduced production of bubbles.

## Claims

1. A method for producing hydroxypropyl methylcellulose acetate succinate comprising:
an esterification reaction step of allowing hydroxypropyl methylcellulose and an esterification agent to react with each other in the presence of a catalyst to produce a reaction solution;
a precipitation step of mixing water with the reaction solution to precipitate crude hydroxypropyl methylcellulose acetate succinate to obtain a suspension of hydroxypropyl methylcellulose acetate succinate;
a liquid removal step of using a screw press to remove liquid from the suspension of hydroxypropyl methylcellulose acetate succinate to obtain liquid-removed hydroxypropyl methylcellulose acetate succinate;
a pulverizing step of pulverizing the liquid-removed hydroxypropyl methylcellulose acetate succinate using a pulverizer to obtain pulverized hydroxypropyl methylcellulose acetate succinate; and
a drying step of drying the pulverized hydroxypropyl methylcellulose acetate succinate to obtain hydroxypropyl methylcellulose acetate succinate.

2. The method according to claim 1, further comprising a washing step of washing the crude hydroxypropyl methylcellulose acetate succinate in the suspension of hydroxypropyl methylcellulose acetate succinate obtained in the precipitation step to prepare a suspension of hydroxypropyl methylcellulose acetate succinate for use in the liquid removal step, wherein the washing step is introduced between the precipitation step and the liquid removal step.

3. The method according to claim 1 or 2, further comprising a preliminary liquid removal step of preliminarily removing a liquid using a dehydrator from the suspension of hydroxypropyl methylcellulose acetate succinate obtained in the precipitation step to prepare a preliminarily liquid-removed hydroxypropyl methylcellulose acetate succinate for use in the liquid removal step, wherein the preliminary liquid removal step is introduced between the precipitation step and the liquid removal step.

4. The method according to any one of claims 1 to 3, wherein the pulverizer for use in the pulverizing step is a feather mill.

5. The method according to any one of claims 1 to 4, wherein the screw press for use in the liquid removal step has a screw shaft inlet temperature of 0 to 80°C.

6. The method according to any one of claims 1 to 5, wherein the liquid-removed hydroxypropyl methylcellulose acetate succinate has a water content of 25 to 60% by mass.

7. A hydroxypropyl methylcellulose acetate succinate having a loose bulk density above 0.6 g/cm³.
